# EUROPEAN PATENT SPECIFICATION

(11) **EP 4 015 906 B1**
(45) Date of publication and mention of the grant of the patent: **19.06.2024**
(21) Application number: 21213899.4
(22) Date of filing: 10.12.2021
(51) Int. Cl.: F23R 3/00, F02C 7/264

(54) **COMBUSTOR FOR GAS TURBINE ENGINE WITH RADIALLY ORIENTED INTERNALLY MOUNTED TORCH IGNITER**
BRENNKAMMER FÜR GASTURBINENMOTOR MIT RADIAL AUSGERICHTETEM, INTERN MONTIERTEM FACKELZÜNDER
CHAMBRE DE COMBUSTION POUR MOTEUR DE TURBINE À GAZ AVEC ALLUMEUR DE TORCHE À ORIENTATION RADIALE ET À MONTAGE INTERNE

(30) Priority: 17.12.2020 US 202017125072
(43) Date of publication of application: 22.06.2022
(73) Proprietor: Collins Engine Nozzles, Inc., West Des Moines, IA 50265 (US)
(72) Inventor: RYON, Jason A., Carlisle, 50047 (US); WILLIAMS, Brandon Phillip, Johnston, 50131 (US); PROCIW, Lev A., Johnston, 50131 (US)
(74) Representative: Dehns

(56) References cited:
- GB-A- 791 990
- KR-B1- 101 279 722
- US-A- 4 194 358
- US-A1- 2014 366 505
- US-A1- 2019 032 561
- US-A1- 2020 309 378

## Description

### BACKGROUND

The present disclosure relates to gas turbine engines and, more particularly, to orientations of torch igniters used in the combustor section of a gas turbine engine.

Torch igniters can be used in lieu of spark igniters to provide an ignition source for combustors located in gas turbine engines. Torch igniters provide a flame as an ignition source for a combustor rather than the electric current provided by spark igniters. Torch igniters mounted externally to a high pressure case of the gas turbine engine must be able to withstand a high pressure differential to prevent leaks. Mounting torch igniters within a high pressure case of the gas turbine engine does not require the torch igniters to withstand this high pressure differential. However, torch igniters mounted within the high pressure case can experience extremely high temperatures during engine operation. These high temperature conditions can damage temperature-sensitive elements of the torch igniter. US 2014/366505 relates to an ignition system.

### SUMMARY

The invention is defined in the appended claims. The present specification provides a combustor of a gas turbine engine that includes a combustor case extending along a primary combustor centerline to convey compressed airflow from a compressor to a turbine section, a combustor liner disposed within the combustor case to define a main combustor zone, at least one fuel nozzle situated at an upstream end of the combustor liner, relative to the primary combustor centerline, and a torch igniter situated partially within the combustor case. The combustor case includes a torch igniter opening. The torch igniter includes a combustion chamber extending along a torch igniter axis and having axially upstream and downstream ends defining a flow direction through the combustion chamber with respect to the torch igniter axis, a cap defining the axially upstream end of the combustion chamber with respect to the torch igniter axis, wherein the cap is configured to receive at least one surface igniter and at least one fuel injector, a tip defining the axially downstream end of the combustion chamber with respect to the torch igniter axis, an annular igniter wall extending along and surrounding the torch igniter axis from the cap to the tip and defining a radial extent of the combustion chamber, a structural wall coaxial with and surrounding the igniter wall, and an outlet passage defined by the igniter wall within the tip and fluidly connected to the combustion chamber. The torch igniter is situated within the torch igniter opening such that the tip is mounted through the combustor liner, the combustion chamber is within the combustor case, and the cap extends through the combustor case.

### BRIEF DESCRIPTION OF THE DRAWINGS

FIG. 1 is a cross-sectional view of an example of a combustor of a gas turbine engine containing a torch igniter.
FIG. 2 is a cross-sectional close-up view of an example of the torch igniter of FIG. 1.
FIG. 3 is a cross-sectional view of an example of a cap section of the torch igniter of FIGs. 1 and 2.
FIG. 4 is a cross-sectional view of an example of an elbow region of the torch igniter of FIGs. 1 and 2.
FIG. 5 is a perspective cutaway view of an example of the torch igniter of FIGs. 1 and 2 mounted on a combustor dome.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which also fall within the scope of the appended claims. The figures may not be drawn to scale, and applications and embodiments of the present invention may include features and components not specifically shown in the drawings.

### DETAILED DESCRIPTION

The present disclosure provides structures for a combustor of a gas turbine engine containing a torch igniter. The mounting of a torch igniter partially within the high pressure section of a gas turbine engine prevents stress on the combustion chamber of the torch igniter while preventing damage to temperature-sensitive components of the torch igniter, and does not require the torch igniter to be built to withstand a high pressure differential.

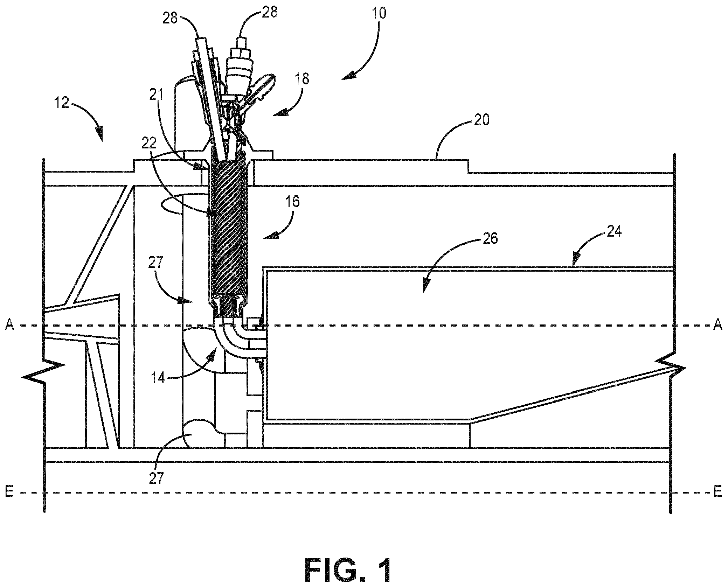

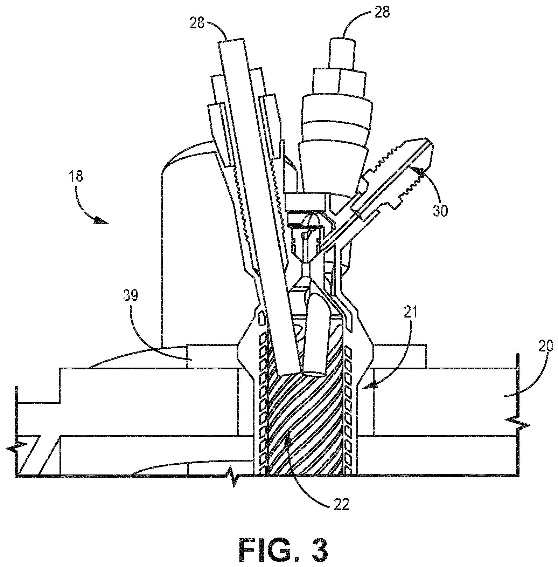

FIG. 1 is a cross-sectional view of torch igniter 10 disposed within engine combustor section 12 of a gas turbine engine. Torch igniter 10 is composed of tip 14, combustion section 16, and cap 18. Torch igniter 10 extends into high pressure case 20 through torch igniter opening 21, such that combustion chamber 22 of torch igniter 10 is located inside high pressure case 20. Tip 14 of torch igniter 10 is situated within high pressure case 20 and is mounted through liner 24 of combustor 26. Fuel nozzles 27 provide fuel to combustor 26. The gas turbine engine is arranged such that high pressure case 20, liner 24, and combustor 26 are disposed circumferentially about engine axis E-E. Engine axis E-E is a rotational axis of the gas turbine engine. Primary combustor centerline A-A is a centerline for the two-dimensional cross section of engine combustor section 12 shown in FIG. 1. Cap 18 of torch igniter 10 is situated outside high pressure case 20. The example of torch igniter 10 in FIG. 1 is shown as receiving glow plugs 28. Glow plugs 28 are surface igniters which can be resistively heated to ignite fuel from a fuel injector and create combustion within torch igniter 10, creating a flame within combustion chamber 22. Torch igniter 10 intakes air from an inlet disposed in cap 18 of torch igniter 10, and cap 18 is also configured to intake fuel from a fuel injector through fuel inlet fitting 30 (shown in FIG. 3). The air can be high-pressure air from the high-pressure section of the gas turbine engine. Combustion chamber 22 is in fluid communication with an internal volume of combustor 26 via an outlet within tip 14, allowing the flame created within combustion chamber 22 to reach the interior of combustor 26 and thereby ignite fuel within combustor 26. Torch igniter 10 can serve as an initial ignition mechanism for combustor 26, as a stabilizer of fuel combustion within combustor 26, or as a relight mechanism for combustor 26.

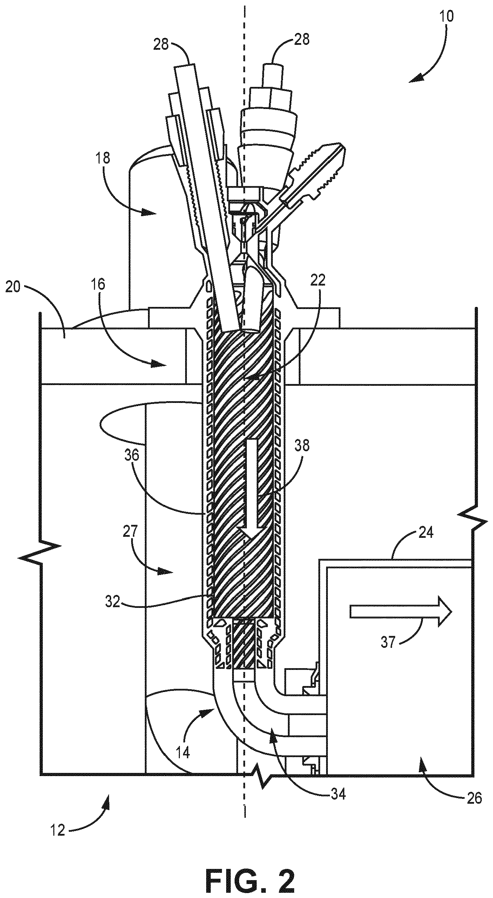

FIG. 2 is a cross-sectional view of torch igniter 10. Igniter wall 32 is a housing which surrounds the internal volume of torch igniter 10, which includes combustion chamber 22 and outlet passage 34, such that igniter wall 32 runs from the end of tip 14 to cap 18. Igniter wall 32 can be annular where it surrounds combustion chamber 22 and outlet passage 34, and can be dome- or cone-shaped where it extends to cap 18. In the depicted example, igniter wall 32 has a larger diameter where it surrounds combustion chamber 22 than where it surrounds outlet passage 34. Structural wall 36 coaxially surrounds igniter wall 32, and can be separated from igniter wall 32 by cooling channels. Igniter wall 32 is shown transparent in the cross section of FIGs. 1 and 2 for ease of viewing. Structural wall 36 can be thinner than would be required of structural walls for torch igniters mounted externally to high pressure case 20, because torch igniter 10 does not need to withstand the pressure difference between the air inside high pressure case 20 and the air outside high pressure case 20. The construction of torch igniter 10 can therefore account for the pressure level within high pressure case 20, where the pressure difference between the internal volume of torch igniter 10 and the external surface of torch igniter 10 is much lower than for a torch igniter located outside a high pressure case.

Combustor flow direction 37 shows the general direction of flow for fluids within engine combustor section 12. Torch igniter 10 is arranged such that combustion section 16 and cap 18 are oriented coaxially about torch igniter axis I-I. In the depicted embodiment, torch igniter axis I-I is oriented approximately perpendicular to primary combustor centerline A-A. Igniter flow direction 38 shows the general direction of flow for fluids within combustion chamber 22 of torch igniter 10. Thus, torch igniter 10 has upstream and downstream ends oriented along torch igniter axis I-I and according to the direction of igniter flow direction 38. Combustion chamber 22 and outlet passage 34 are fluidly connected such that combustion products are able to flow from combustion chamber 22 toward tip 14 and to outlet passage 34. Combustion products are able to exit torch igniter 10 and enter an internal volume of a main combustor, such as combustor 26, via outlet passage 34. To this extent, cap 18 is disposed at the upstream end of torch igniter 10 and tip 14 is disposed at the downstream end of torch igniter 10. It should be understood, however, that tip 14 can be disposed at any suitable location on the downstream end of torch igniter 10.

FIG. 3 is a cross-sectional view of cap 18 of torch igniter 10. During operation, torch igniter 10 causes combustion within combustion chamber 22 by using a fuel injector to inject a fuel-air mixture that impinges on the surface of glow plug 28. Glow plugs 28 extend through cap 18, such that each glow plug 28 has an internal end and an external end with respect to torch igniter 10. Further, glow plugs 28 can be resistively heated such that they are able to ignite the fuel-air mixture injected through fuel inlet fitting 30 when the fuel-air mixture impinges on the internal ends of glow plugs 28.

In the depicted embodiment, torch igniter 10 is configured to receive three glow plugs 28. However, in other embodiments, torch igniter 10 can be configured to receive one glow plug 28, two glow plugs 28, or more than three glow plugs 28. It can be desirable for torch igniter 10 to be configured with multiple glow plugs at multiple locations within combustion chamber 22 to improve ignition of fuel injected through fuel inlet fitting 30. Further, if the injection pattern through fuel inlet fitting 30 is distorted, using multiple glow plugs 28 at multiple locations within combustion chamber 22 can improve the likelihood that the injected fuel impinges on at least one glow plug 28.

Glow plugs 28 are also connected to a power source capable of delivering electric current to the external ends of glow plugs 28, allowing for the electrically-resistive heating of glow plugs 28. In examples where torch igniter 10 contains multiple glow plugs 28, they can be connected to more than one power source or can be connected in series, parallel, or a combination of arrangements to a single power source. Generally, glow plugs 28 are formed of a material capable of being resistively heated. For example, glow plugs 28 can be formed of a ceramic material, such as silicon nitride.

Torch igniter 10 is secured within torch igniter opening 21 by flange 39. Flange 39 circumferentially surrounds torch igniter 10. Flange 39 can be fastened to high pressure case 20 by one or more connectors such as screw-on nuts, bolts, or screws, and can be sealed by sealing devices such as C seals (not shown) to prevent leaks between the flange 39 and high pressure case 20.

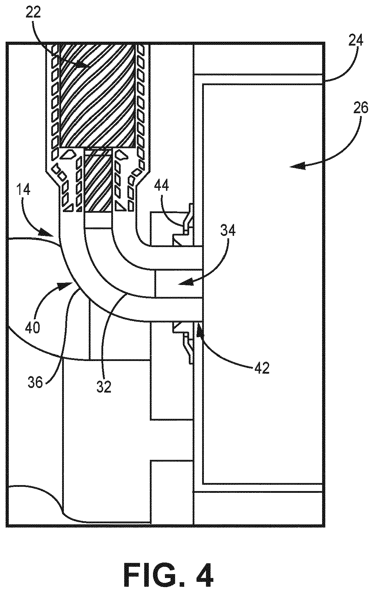

FIG. 4 is a cross-sectional view of tip 14 of torch igniter 10. Tip 14 consists of elbow 40, igniter wall 32, structural wall 36, and outlet passage 34. Tip 14 is mounted to liner 24 at liner opening 42 and is secured within liner opening 42 by liner seal 44. Liner seal 44 can consist of any suitable seal, such as floating seal collars. The amount of allowed float for liner seal 44 can vary based on tolerances and thermal growth differences. Tip 14 can be slip fit to liner seal 44. Elbow 40 can be cooled by the use of cooling channels within torch igniter 10. In the depicted example, elbow 40 turns approximately 90° between combustion chamber 22 of torch igniter 10 and liner 24 of combustor 26. However, it should be understood that elbow 40 can bend at any suitable angle, including non-90° angles. Most generally, elbow 40 has a shape and orientation suitable to redirect igniter flow from igniter flow direction 38 into combustor 26 and in some embodiments towards combustor flow direction 37.

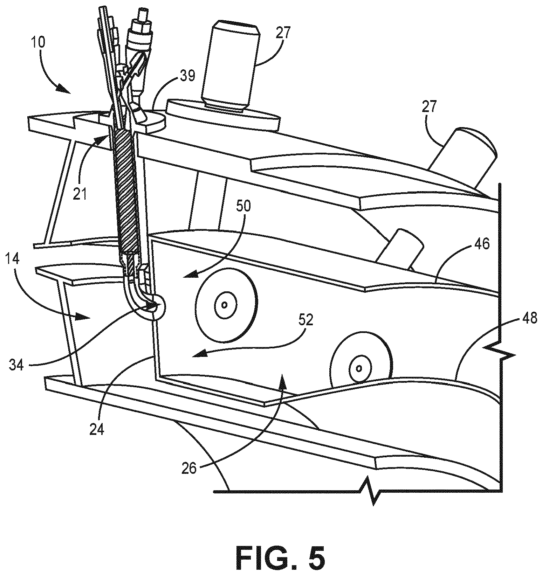

FIG. 5 is a cutaway view of torch igniter 10 mounted to liner 24. Torch igniter 10 is secured within torch igniter opening 21 by flange 39. In the depicted embodiment, tip 14 of torch igniter 10 is approximately equidistant from external edge 46 and internal edge 48 of liner 24. However, tip 14 of torch igniter 10 can be mounted through various other sections of liner 24 in order to optimize the ability of torch igniter 10 to ignite, stabilize, or relight combustor 26. For example, it might be advantageous to situate torch igniter 10 such that tip 14 can ignite fuel in outer recirculation zone 50 or inner recirculation zone 52 of combustor 26 in order to stabilize combustion within combustor 26. The location of tip 14 with respect to fuel nozzles 27 can also be varied to optimize the efficacy of torch igniter 10.

The internal volume of a torch igniter mounted external to the high pressure case of a combustor experiences much higher pressure and temperatures than the external surface of the torch igniter. This can cause stress on the torch igniter, particularly on the igniter wall and structural wall, and can increase the risk of rupture or other mechanical failure. Mounting a torch igniter such that the combustion chamber is within the high pressure case is therefore desirable to avoid strain on the structural components of the torch igniter. Situating the combustion chamber internally also allows for containment within the high pressure case if the torch igniter ruptures. With the torch igniter positioned through the high pressure case, pressure- and temperature-sensitive elements such as electrical connections to a power source can be located outside the case. This orientation combines the advantages of mounting schemes which are completely external and ones which are completely internal.

### Discussion of Possible Embodiments

The following are non-exclusive descriptions of possible embodiments of the present invention.

A combustor of a gas turbine engine oriented along an engine axis, according to the invention, includes, among other possible things, a combustor case extending along a primary combustor centerline to convey compressed airflow from a compressor to a turbine section, a combustor liner disposed within the combustor case to define a main combustor zone, at least one fuel nozzle situated at an upstream end of the combustor liner relative to the primary combustor axis, and a torch igniter situated partially within the combustor case. The combustor case includes a torch igniter opening. The torch igniter includes a combustion chamber extending along a torch igniter axis and having axially upstream and downstream ends defining a flow direction through the combustion chamber with respect to the torch igniter axis, a cap defining the axially upstream end of the combustion chamber with respect to the torch igniter axis and configured to receive at least one surface igniter and at least one fuel injector, a tip defining the axially downstream end of the combustion chamber with respect to the torch igniter axis, an annular igniter wall extending along and surrounding the torch igniter axis from the cap to the tip and defining a radial extent of the combustion chamber, a structural wall coaxial with and surrounding the igniter wall, and an outlet passage defined by the igniter wall within the tip and fluidly connected to the combustion chamber. The torch igniter is situated within the torch igniter opening such that the tip is mounted through the combustor liner, the combustion chamber is within the combustor case, and the cap extends through the combustor case.

The torch igniter is oriented such that the torch igniter axis extends radially inward with respect to the primary combustor centerline and the engine axis.

The tip comprises an elbow between the combustion chamber and the combustor liner.

The elbow turns 90 degrees from the combustion chamber to the combustor liner.

According to an embodiment of the foregoing combustor, a flange is connected to the combustor case and secures the torch igniter within the torch igniter opening and to the combustor case.

The tip of the torch igniter is mounted to the combustor liner at an axially upstream end of the combustor liner with respect to the primary combustor centerline.

A further embodiment of any of the foregoing combustors, wherein the torch igniter ignites fuel in an outer recirculation zone of the combustor.

A further embodiment of any of the foregoing combustors, wherein the torch igniter ignites fuel in an inner recirculation zone of the combustor.

A further embodiment of any of the foregoing combustors, wherein the torch igniter axis is oriented perpendicular to the primary combustor centerline.

A further embodiment of any of the foregoing combustors, wherein the cap is configured to receive at least three surface igniters.

A further embodiment of any of the foregoing combustors, wherein the torch igniter is positioned between two fuel nozzles of the combustor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A combustor of a gas turbine engine oriented about an engine axis, the combustor comprising:
a combustor case (20) extending along a primary combustor centerline to convey compressed airflow from a compressor to a turbine section, wherein the combustor case comprises a torch igniter opening;
a combustor liner (24) disposed within the combustor case to define a main combustor zone;
at least one fuel nozzle (27) situated at an upstream end of the combustor liner, relative to the primary combustor centerline; and
a torch igniter (10) situated partially within the combustor case, the torch igniter comprising:
a combustion chamber (22) extending along a torch igniter axis, the combustion chamber having axially upstream and downstream ends defining a flow direction through the combustion chamber with respect to the torch igniter axis;
a cap (18) defining the axially upstream end of the combustion chamber with respect to the torch igniter axis, wherein the cap is configured to receive at least one surface igniter and at least one fuel injector;
a tip (14) defining the axially downstream end of the combustion chamber with respect to the torch igniter axis;
an annular igniter wall (32) extending along and surrounding the torch igniter axis from the cap to the tip and defining a radial extent of the combustion chamber;
a structural wall (36) coaxial with and surrounding the igniter wall; and
an outlet passage (34) defined by the igniter wall within the tip, wherein the outlet passage is fluidly connected to the combustion chamber;
wherein the torch igniter is situated within the torch igniter opening such that the tip is mounted through the combustor liner, the combustion chamber is within the combustor case, and the cap extends through the combustor case, wherein the torch igniter (10) is oriented such that the torch igniter axis extends radially inward with respect to the primary combustor centerline and the engine axis,
**characterized in that**
the
tip (14) comprises an elbow (40) between the combustion chamber and the combustor liner, and wherein the elbow turns 90 degrees from the combustion chamber to the combustor liner, wherein the tip (14) of the torch igniter is mounted to the combustor liner at an axially upstream end of the combustor liner with respect to the primary combustor centerline.

2. . The combustor of claim 1, wherein a flange (39) is connected to the combustor case and secures the torch igniter within the torch igniter opening and to the combustor case.

3. The combustor of claim 1, wherein the torch igniter (10) ignites fuel in an outer recirculation zone of the combustor; or
wherein the torch igniter (10) ignites fuel in an inner recirculation zone of the combustor.

4. The combustor of any preceding claim, wherein the torch igniter axis is oriented perpendicular to the primary combustor centerline.

5. The combustor of any preceding claim, wherein the cap (18) is configured to receive at least three surface igniters.

6. The combustor of any preceding claim, wherein the torch igniter (10) is positioned between two fuel nozzles of the combustor.

## Patentansprüche

1. Brennkammer eines Gasturbinenmotors, die um eine Motorachse ausgerichtet ist, wobei die Brennkammer umfasst:
ein Brennkammergehäuse (20), das sich entlang einer primären Brennkammermittellinie erstreckt, um einen verdichteten Luftstrom von einem Verdichter zu einem Turbinenabschnitt zu leiten, wobei das Brennkammergehäuse eine Brennerzünderöffnung umfasst;
eine Brennkammerauskleidung (24), die innerhalb des Brennkammergehäuses angeordnet ist, um eine Hauptbrennkammerzone zu definieren;
mindestens eine Brennstoffdüse (27), die an einem relativ zur primären Brennkammermittellinie, stromaufwärts gelegenen Ende der Brennkammerverkleidung angeordnet ist; und
einen Brennerzünder (10), der teilweise innerhalb des Brennkammergehäuses angeordnet ist, wobei der Brennerzünder umfasst:
eine Verbrennungskammer (22), die sich entlang einer Brennerzünderachse erstreckt, wobei die Verbrennungskammer ein axial stromaufwärts und ein axial stromabwärts gelegenes Ende aufweist, die eine Strömungsrichtung durch die Verbrennungskammer in Bezug auf die Brennerzünderachse definieren;
eine Kappe (18), die das axial stromaufwärts gelegene Ende der Verbrennungskammer in Bezug auf die Brennerzünderachse definiert, wobei die Kappe dazu konfiguriert ist, mindestens einen Oberflächenzünder und mindestens einen Brennstoffinjektor aufzunehmen;
eine Spitze (14), die das in Bezug auf die Brennerzünderachse axial stromabwärts gelegene Ende der Verbrennungskammer definiert;
eine ringförmige Zünderwand (32), die sich entlang der Brennerzünderachse von der Kappe zu der Spitze erstreckt und diese umgibt und eine radiale Ausdehnung der Verbrennungskammer definiert;
eine strukturelle Wand (36), die koaxial mit der Zünderwand ist und diese umgibt; und
einen Auslasskanal (34), der innerhalb der Spitze durch die Zünderwand definiert ist,
wobei der Auslasskanal in strömungstechnischer Verbindung mit der Verbrennungskammer steht;
wobei der Brennerzünder innerhalb der Brennerzünderöffnung angeordnet ist, derart, dass die Spitze durch die Brennkammerauskleidung hindurch montiert ist, die Brennkammer innerhalb des Brennkammergehäuses angeordnet ist und sich die Kappe durch das Brennkammergehäuse erstreckt, wobei der Brennerzünder (10) derart ausgerichtet ist, dass sich die Brennerzünderachse in Bezug auf die primäre Brennkammermittellinie und die Motorachse radial nach innen erstreckt,
**dadurch gekennzeichnet, dass**
die Spitze (14) einen Winkel (40) zwischen der Verbrennungskammer und der Brennkammerauskleidung umfasst, und wobei der Winkel von der Verbrennungskammer zur Brennkammerauskleidung eine Wendung um 90 Grad vollzieht, wobei die Spitze (14) des Brennerzünders an einem in Bezug auf die primäre Brennkammerauskleidungsmittellinie axial stromaufwärts gelegenen Ende der Brennkammerauskleidung an der Brennkammerauskleidung montiert ist.

2. Brennkammer nach Anspruch 1, wobei ein Flansch (39) mit dem Brennkammergehäuse verbunden ist und den Brennerzünder innerhalb der Brennerzünderöffnung und an dem Brennkammergehäuse befestigt.

3. Brennkammer nach Anspruch 1, wobei der Brennerzünder (10) Brennstoff in einer äußeren Rezirkulationszone der Brennkammer zündet; oder
wobei der Brennerzünder (10) Brennstoff in einer inneren Rezirkulationszone der Brennkammer zündet.

4. Brennkammer nach einem der vorhergehenden Ansprüche, wobei die Brennerzünderachse senkrecht zur primären Brennkammermittellinie ausgerichtet ist.

5. Brennkammer nach einem der vorhergehenden Ansprüche, wobei die Kappe (18) dazu konfiguriert ist, mindestens drei Oberflächenzünder aufzunehmen.

6. Brennkammer nach einem der vorhergehenden Ansprüche, wobei der Brennerzünder (10) zwischen zwei Brennstoffdüsen der Brennkammer angeordnet ist.

## Revendications

1. Brûleur d'un moteur à turbine à gaz orienté autour d'un axe de moteur, le brûleur comprenant :
un carter de brûleur (20) s'étendant le long d'une ligne centrale de brûleur primaire pour acheminer un flux d'air comprimé d'un compresseur à une section de turbine, dans lequel le carter de brûleur comprend une ouverture d'allumeur torche ;
une chemise de brûleur (24) disposée à l'intérieur du carter de brûleur pour définir une zone de brûleur principale ;
au moins une buse de carburant (27) située à une extrémité amont de la chemise de brûleur, par rapport à la ligne centrale de brûleur primaire ; et
un allumeur torche (10) situé partiellement à l'intérieur du carter de brûleur, l'allumeur torche comprenant :
une chambre de combustion (22) s'étendant le long d'un axe d'allumeur torche, la chambre de combustion ayant des extrémités axialement en amont et en aval définissant une direction d'écoulement à travers la chambre de combustion par rapport à l'axe d'allumeur torche ;
un capuchon (18) définissant l'extrémité axialement en amont de la chambre de combustion par rapport à l'axe d'allumeur torche, dans lequel le capuchon est conçu pour recevoir au moins un allumeur à surface et au moins un injecteur de carburant ;
un embout (14) définissant l'extrémité axialement en aval de la chambre de combustion par rapport à l'axe d'allumeur torche ;
une paroi d'allumeur annulaire (32) s'étendant le long et entourant l'axe d'allumeur torche du capuchon jusqu'à l'embout et définissant une étendue radiale de la chambre de combustion ;
une paroi structurelle (36) coaxiale avec et entourant la paroi d'allumeur ; et
un passage de sortie (34) défini par la paroi d'allumeur à l'intérieur de l'embout, dans lequel le passage de sortie est relié fluidiquement à la chambre de combustion ;
dans lequel l'allumeur torche est situé à l'intérieur de l'ouverture d'allumeur torche de telle sorte que l'embout soit monté à travers la chemise de brûleur, la chambre de combustion se trouve à l'intérieur du carter de brûleur, et le capuchon s'étend à travers le carter de brûleur, dans lequel l'allumeur torche (10) est orienté de telle sorte que l'axe d'allumeur torche s'étende radialement vers l'intérieur par rapport à la ligne centrale de brûleur primaire et à l'axe de moteur, **caractérisé en ce que**
l'embout (14) comprend un coude (40) entre la chambre de combustion et la chemise de brûleur, et dans lequel le coude tourne à 90 degrés de la chambre de combustion à la chemise de brûleur, dans lequel l'embout (14) de l'allumeur torche est monté sur la chemise de brûleur au niveau d'une extrémité axialement en amont de la chemise de brûleur par rapport à la ligne centrale de brûleur primaire.

2. Brûleur selon la revendication 1, dans lequel une bride (39) est reliée au carter de brûleur et fixe l'allumeur torche à l'intérieur de l'ouverture d'allumeur torche et au carter de brûleur.

3. Brûleur selon la revendication 1, dans lequel l'allumeur torche (10) enflamme le carburant dans une zone de recirculation externe du brûleur ; ou
dans lequel l'allumeur torche (10) enflamme le carburant dans une zone de recirculation interne du brûleur.

4. Brûleur selon une quelconque revendication précédente, dans lequel l'axe d'allumeur torche est orienté perpendiculairement à la ligne centrale de brûleur primaire.

5. Brûleur selon une quelconque revendication précédente, dans lequel le capuchon (18) est conçu pour recevoir au moins trois allumeurs à surface.

6. Brûleur selon une quelconque revendication précédente, dans lequel l'allumeur torche (10) est positionné entre deux buses de combustible du brûleur.
